# EUROPEAN PATENT APPLICATION

(11) **EP 2 808 774 A2**
(43) Date of publication of application: **03.12.2014**
(21) Application number: 14169214.5
(22) Date of filing: 21.05.2014
(51) Int. Cl.: G06F 3/0488

(54) **Electronic device for executing application in response to user input**

(30) Priority: 31.05.2013 KR 20130062388
(71) Applicant: Samsung Electronics Co., Ltd, Gyeonggi-do 443-742 (KR)
(72) Inventor: Park, Taegun, 443-742 Gyeonggi-do (KR)
(74) Representative: Jenkins, Richard Gavin

(57) **Abstract**

Disclosed herein are a system and electronic device for executing an application in response to an input. A movement of an object is detected through a touch panel. An application corresponding to the movement is searched. Information associated with the application is displayed, when the application corresponding to the movement is found. The application corresponding to the movement is executed.

## Description

### BACKGROUND

### 1. Field

The present disclosure relates generally to an operation of an electronic device, and more particularly to a method of executing an application in response to user input and an electronic device for implementing the same

### 2. Description of the Prior Art

Electronic devices heretofore are capable of supporting complex operations due to the advancement of hardware technology. Thus, electronic devices equipped with a touch screen are widely used today. An electronic device may display information on the touch screen and provide feedback to the user in response to a user input, such as a touch on an icon displayed on the touch screen. The electronic device may further execute an application corresponding to the touched icon and display information associated with the executed application.

### SUMMARY

A user may execute various applications downloaded to his/her electronic device (e.g., a smart phone, tablet PC or the like). For example, the electronic device may display an icon for executing the application and execute the application in response to a user input aimed at the displayed icon. Furthermore, the electronic device may display shortcuts corresponding to the application icon and allow the application to be executed through the shortcuts. In addition, the electronic device may display a folder gathering the same type of applications (e.g., games, videos, etc.) into a bundle and allow the application to be executed through the folder.

However, in order to execute an application, a plurality of user input steps may be required. By way of example, the electronic device may execute a game in response to a user's request while displaying a webpage. In order to execute the game, a user input for closing the webpage, finding an icon corresponding to the game, displaying the found icon, and selecting the displayed icon may be required. Unfortunately, these multiple user inputs may be inconvenient and cumbersome for the user.

In view of the forgoing, aspects of the present disclosure provide a method and electronic device for seamlessly executing an application desired by a user. In particular, an aspect of the present disclosure provides a method and electronic device for seamlessly executing an application using an object through a touch screen.

In accordance with an aspect of the present disclosure, a method of operating an electronic device may include: detecting a movement of an object through a touch panel of an electronic device; searching for an application corresponding to the movement of the object in response to the movement; displaying information associated with the application, when the application corresponding to the movement is found; and executing the application corresponding to the movement, when selection of the displayed information is detected.

In accordance with another aspect of the present disclosure, an electronic device may include: a display unit including a touch panel; at least one processor to:
detect a movement of an object through the touch panel; search for an application corresponding to the movement of the object in response to the movement; display information associated with the application, when the application corresponding to the movement is found; and execute the application corresponding to the movement, when selection of the displayed information is detected.

Accordingly, the method and the apparatus disclosed herein allows a user to easily and quickly execute an application.

### BRIEF DESCRIPTION OF THE DRAWINGS

The features and advantages of the present disclosure will be more apparent from the following detailed description in conjunction with the accompanying drawings, in which:
FIG. 1 is a block diagram of an example electronic device in accordance with aspects of the present disclosure;
FIGS. 2A to 2D illustrate example screens in accordance with aspects of the present disclosure;
FIG. 3 is a flowchart of an example execution method in accordance with aspects of the present disclosure;
FIG. 4 is a flowchart of a further example execution method in accordance with aspects of the present disclosure; and
FIG. 5 is a flowchart of another example execution method in accordance with aspects of the present disclosure.

### DETAILED DESCRIPTION

An electronic device may include, but is not limited to, a smart phone, tablet Personal Computer (PC), a notebook PC, a digital camera, a smart TeleVision (TV), a Personal Digital Assistant (PDA), an electronic scheduler, a desktop PC, a Portable Multimedia Player (PMP), a media player (e.g., MP3 player), audio equipment, a smart watch, a terminal for a game and the like. Furthermore, an electronic device having a touch screen may include home appliances (e.g., a refrigerator, TV, and washing machine).

The electronic device may have a touch screen and may detect a user input through the touch screen. In one example, the electronic device may detect an object through the touch screen. The object may be a finger, a pen, or a stylus. Furthermore, the electronic device may execute an application in response to an input by the object. Hereinafter, various examples of the present disclosure will be described in detail with reference to the accompanying drawings. Description of technology understood by those skilled in the art that are not directly related to the present disclosure may be omitted. Furthermore, a detailed description of components having substantially the same configuration and function may be omitted. Based on the same reasoning, some components are exaggerated, omitted, or schematically illustrated in the accompanying drawings. It is understood that a size of each component does not reflect its actual size. Accordingly, the present disclosure is not limited by a relative size or interval illustrated in the accompanying drawings.

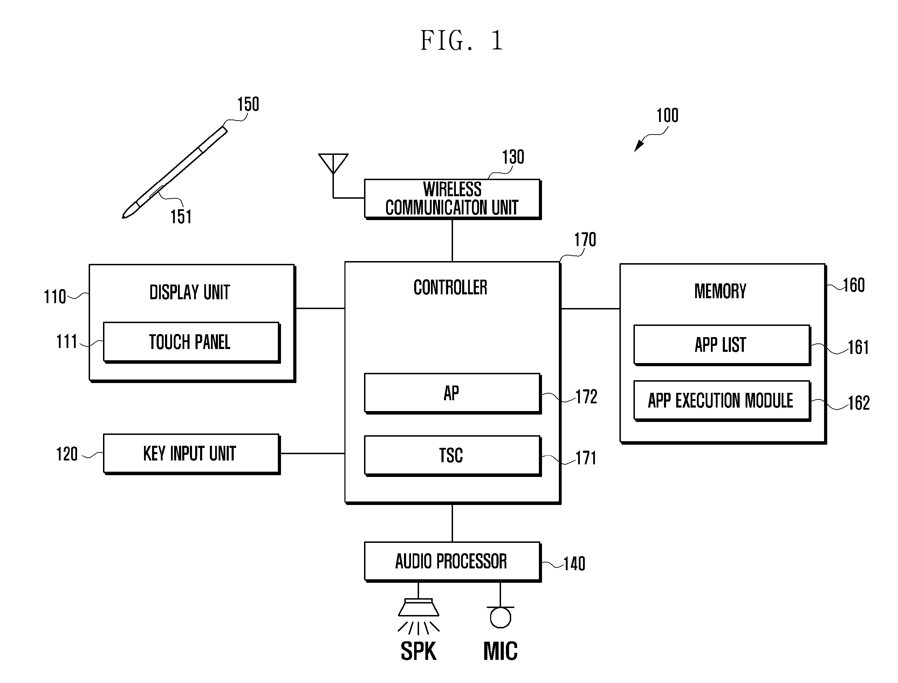

Referring to FIG. 1, an electronic device 100 may include a display unit 110, a key input unit 120, a wireless communication unit 130, an audio processor 140, a speaker SPK, a microphone MIC, a pen 150, a memory 160, and a controller 170. The display unit 110 may display various pieces of information on a screen in accordance with controller 170, which may comprise at least one processor. For example, when the controller 170 processes (e.g., decodes) information and stores the processed information in the memory (e.g., frame buffer), the display unit 110 may convert data stored in the frame buffer to an analog signal and display the analog signal on the screen. The display unit 110 may be implemented by a Liquid Crystal Display (LCD), an Active Matrix Organic Light Emitted Diode (AMOLED), a flexible display, or a transparent display.

When power is supplied to the display unit 110, the display unit 110 may display a lock image on the screen. When a user input (e.g., password) for releasing the lock is detected in a state where the lock image is displayed, the controller 170 may release the lock. When the lock is released, the display unit 110 may display, for example, a home image instead of the lock image on the screen under a control of the controller 190. The home image may include a background image (e.g., picture set by the user) and icons displayed on the background image. The icons may be associated with applications, digital content (e.g., picture file, video file, recording file, document, message and the like) or the like. When a user input for executing one of the icons is detected, the controller 170 may execute the corresponding application.

A touch panel 111 may be installed in the screen of the display unit 110. For example, the touch panel 111 may be implemented in an add-on type located on the screen of the display unit 110, or an on-cell type or an in-cell type inserted into the display unit 110. Further, the touch panel 111 may generate an event (e.g., approach event, hovering event, touch event or the like) in response to a user input (e.g., approach, hovering, touch or the like) of an object (e.g., finger, pen, stylus etc.) on the screen of the display unit 110. That is, the touch screen may include a touch screen controller that coverts the generated event from analog to digital and transmits the converted event to controller 170. When the object approaches the touch screen, the touch panel 111 may generate an approach event in response to the approach and transmit the generated approach event to the touch screen controller. The approach event may include information on a movement of the object and a direction of the movement. When the object, such as a pointing device, hovers on the touch screen, the touch panel 111 may generate a hovering event in response to the hovering and transmit the generated hovering event to the touch screen controller. The hovering event may include raw data, for example, one or more hovering coordinates (x_hovering and y_hovering). When the pointing device touches the touch screen, the touch panel 111 may generate a touch event in response to the touch and transmit the generated touch event to the touch screen controller. The touch event may also include raw data, for example, one or more touch coordinates (x_touch and y_touch).

In a further example, the touch panel 111 may be a complex touch panel including a finger touch panel that detects a finger input and a pen touch panel that detects the touch of a pen or a stylus. The finger touch panel may be implemented as a capacitive type touch panel. Furthermore, the finger touch panel may be implemented in a resistive type, an infrared type, or an acoustic wave type. Further, the finger touch panel may generate an event in response to the touch of another human body part or another object (e.g., conductive object causing a change in capacitance). The pen or stylus touch panel may be a digitizer sensor substrate implemented as an Electro-Magnetic Resonance (EMR) type. Accordingly, the pen or stylus touch panel may generate an event by a pen or stylus specially manufactured for formation of a magnetic field. The pen or stylus touch panel may generate a key event. For example, when a button installed in a pen is pressed, a magnetic field generated in a coil of the pen may be changed. The pen or stylus touch panel may generate a key event in response to the change in the magnetic field and transmit the generated key event to the controller 170, particularly, the touch screen controller.

The key input unit 120 may include one or more touch keys. In general, the touch key may refer to all types of input means that can recognize a touch or approach of a human body part and/or an object. For example, the touch key may include a capacitive type touch key that detects an approach of a human body part or an object having conductivity. Such an approach may be identified as user input. The touch key may generate an event in response to a touch of the user and transmit the generated event to controller 170. Furthermore, the touch key may be installed close to the screen (e.g., lower end of the screen). For example, the controller 170 may control the display unit 110 to display a menu on a lower end of the screen in response to a touch of the user on a first touch key (e.g., menu loading key). Furthermore, the controller 170 may control the display unit 110 to display a previous image in response to a touch of the user on a second touch key (e.g., back key).

The key input unit 120 may further include a key that is not on a touch screen. For example, the key input unit 120 may include at least one dome key. When the user presses the dome key, the dome key may come into contact with a printed circuit board such that a key event is generated via the printed circuit board and transmitted to controller 170. The dome key may be installed in a side surface of the electronic device 100 or installed close to the screen (e.g., lower end of the screen). In another example, the key of the key input unit 120 may be called a hard key and the key displayed on the display unit 110 may be called a soft key.

The wireless communication unit 130 may perform a voice call, a video call, or data communication with an external device through a network under a control of the controller 170. The wireless communication unit 130 may include a mobile communication module (e.g., 3-generation mobile communication module, 3.5-generation mobile communication module, 4-generation mobile communication module or the like), a digital broadcasting module (e.g., Digital Multimedia Broadcasting (DMB) module), and a short distance communication module (e.g., Wi-Fi module, Bluetooth module, Near Field Communication (NFC) module).

The audio processor 140 may be combined with the speaker SPK and the microphone MIC to input and output an audio signal (e.g., voice data) for voice recognition, a voice recording, a digital recording, and a call. The audio processor 140 receives an audio signal (e.g., voice data) from the controller 170, D/A-converts the received audio signal to an analog signal, amplifies the analog signal, and then outputs the analog signal to the speaker SPK. The speaker SPK converts an audio signal received from the audio processor 140 to a sound wave and outputs the sound wave. The microphone MIC converts a sound wave transmitted from a human or another sound source to an audio signal. The audio processor 140 A/D-converts an audio signal received from the microphone MIC to a digital signal and then transmits the digital signal to the controller 170.

The pen or stylus 150 may be a component of a portable terminal 100 which can be separated from the electronic device 100. The pen 150 may include a penholder, a nib located at an end of the penholder, a coil located close to and inside the nib to generate a magnetic field, and a button 151 for changing the magnetic field. The coil of the pen or stylus 150 may form the magnetic field around the nib. The touch panel 111 may detect the magnetic field and generate an event corresponding to the magnetic field.

The memory 160 may store data generated in accordance with an operation of electronic device 100 or received remotely through wireless communication unit 130. The memory 160 may include a buffer as a temporary data storage.

The memory 160 may store various pieces of setting information (e.g., screen brightness, whether to generate a vibration when a touch is generated, whether to automatically rotate a screen) for setting a use environment of the electronic device 100. Accordingly, the controller 170 may operate the electronic device 100 with reference to the setting information.

The memory 160 may store a list 161 of applications installed in the electronic device 100. The application list 161 may store an application name, type, version, tag information tagged to each stored application, an image associated with each application (e.g., thumbnail), and trace information associated with each application. The tag information may include a manufacturer, a release date, operating system information and the like. Further, the information may be included in the corresponding application without being separately tagged to the corresponding application. The controller 170 may execute an application contained in application list 161. For example, the controller 170 may read the application list 161 when a pen input is detected. When a movement of a pen is detected, the controller 170 may analyze the movement. The analysis of the controller 170 may include identification of a trace of the movement. Further, the analysis may include an operation of converting the trace to text adaptable for searching the application. The controller 170 may search for an application in view of the analysis (e.g., trace, text or the like) in application list 161. The controller 170 may control the display unit 110 to display information associated with the application on the screen. When a selection of the displayed information is detected, controller 170 may execute the corresponding application.

The memory 160 may store various programs for operating the electronic device 100, for example, a booting program, one or more operating systems, and one or more applications. Particularly, the memory 160 may store an application execution module (quick execution module) 162.

The application execution module 162 may be a program that instructs at least one processer to execute an application in response to a user input using a finger, a stylus, a pen, or any other suitable object.

In one example, the application execution module 162 may instruct at least one processor to detect a movement of an object; search for an application corresponding to the movement of the object in response to the movement; display information associated with the application, when the application corresponding to the movement is found; and execute the application corresponding to the movement, when selection of the displayed information is detected.

In another example, the application execution module 162 may instruct at least one processor to display a trace in response to the movement of the object, when the object is a pen such that pressing of a button arranged in the pen is detected; detect a release of the button through the touch panel; and search for the application corresponding to the displayed trace in response to release of the the button; display information associated with the application; and execute the corresponding application when the displayed information is selected by the user.

In yet a further example, the application execution module 162 may instruct at least one processor to detect a trace in response to the movement of the object, when the object is a pen such that the trace is detected regardless of whether a button arranged in the pen is pressed; detect a release of the button through the touch panel; and search for the application corresponding to the displayed trace in response to release of the the button; display information associated with the application; and execute the corresponding application when the displayed information is selected by the user.

Memory 160 may include a main memory and a secondary memory. The main memory may be implemented by, for example, a Random Access Memory (RAM) or the like. The secondary memory may be implemented by a disc, a RAM, a Read Only Memory (ROM), a flash memory or the like. The main memory may store various programs loaded from the secondary memory, for example, a booting program, an operating system, and applications. When power of a battery is supplied to the controller 170, the booting program may be first loaded to the main memory. The booting program may load the operating system to the main memory. The operating system may load the application (e.g., application execution module 162) to the main memory. The controller 170 (e.g., Application Processor (AP)) may access the main memory to decode a command (routine) of the program and execute a function according to a decoding result. That is, the various programs may be loaded to the main memory and may be executed as processes.

The controller 170 may manage the overall operation of the electronic device 100 and a signal flow between internal components of the electronic device 100. Controller 170 may further process data and control the power supply to the components from the battery. The controller 170 may also include a touch screen controller 171 and at least one Application Processor (AP) 172.

When the touch screen controller 171 receives an event from the touch panel 111, the touch screen controller 171 may calculate a touch coordinate and transmit the calculated touch coordinate to the AP 172.

When the touch screen controller 171 receives a hovering event from the touch panel 111, the touch screen controller 171 may identify the hovering. The touch screen controller 171 may determine a hovering area on the touch screen in response to the hovering and calculate hovering coordinates (x_hovering and y_hovering) in the hovering area. The touch screen controller 171 may transmit the calculated hovering coordinates to, for example, AP 172. The hovering coordinates may be based on pixel units. By way of example, the screen resolution may be 640 (number of horizontal pixels) * 480 (number of vertical pixels), an x-axis coordinate may be (0, 640), and a y-axis coordinate may be (0, 480). Further, the hovering event may include detection information for calculating a depth. For example, the hovering event may include three dimensional hovering coordinates (x, y, and z). Here, the z value may refer to the depth.

When the touch screen controller 171 receives a touch event from the touch panel 111, the touch screen controller 171 may recognize generation of the touch. The touch screen controller 171 may determine a touch area on the touch screen in response to the touch and calculate touch coordinates (x_touch and y_touch) in the touch area. The touch screen controller 171 may transmit the calculated touch coordinates to, for example, the AP 172. The hovering coordinates may be based on a pixel unit.

When the AP 172 receives the hovering coordinates from the touch screen controller 171, the AP 172 may determine that an object is hovering within a predetermined distance of the touch screen. When AP 172 does not receive any hovering coordinates from the touch panel 111, the AP 172 may determine that the object has ceased hovering the touch screen. Further, when a hovering coordinate is changed and a changed amount of the hovering coordinate exceeds a predetermined threshold, the AP 172 may determine that the object is hovering. The AP 172 may calculate a position change amount (dx and dy) of the object, a movement speed of the object, and a trace of the hovering movement. Further, the AP 172 may convert the trace of the hovering movement to text.

In addition, AP 172 may detect a user's gesture on the touch screen based on the hovering coordinates. Furthermore, AP 172 may detect whether the object has ceased hovering; whether the object moves; the position change amount of the object; the movement speed of the object; and a trace of the hovering movement. The user's gesture may include, for example, a drag, a flick, a pinch in, and a pinch out.

When the AP 172 receives the touch coordinates from the touch screen controller 171, the AP 172 may determine that the object is touching touch panel 111. When the AP 172 does not receive the touch coordinates from the touch panel 111, the AP 172 may determine that the object has ceased touching the touch screen. Further, when a touch coordinate is changed and a change amount of the touch coordinate exceeds a predetermined threshold, the AP 172 may determine that the object has moved. The AP 172 may calculate a change in position (dx and dy) of the object, a movement speed of the object, and a trace of the touch movement. Further, the AP 172 may convert the trace of the touch movement to text.

In addition, the AP 172 may determine a touch gesture on the touch screen based on the touch coordinates. AP 172 may also detect whether the touch is released; whether the touching object moves; the change in position of the object; the movement speed of the object, and a trace of the touch movement. The touch gesture may include a touch, a multi-touch, a tap, a double tap, a long tap, a tap & touch, a drag, a flick, a press, a pinch in, and a pinch out.

The AP 172 may execute various types of programs stored in the memory 160 such as application execution module 162. In turn, the application execution module 162 may be executed by a Central Processing Unit (CPU).

The controller 170 may further include other processors as well as the AP 172. For example, the controller 170 may include one or more CPUs. Further, the controller 170 may include a Graphic Processing Unit (GPU). When the electronic device 100 includes a mobile communication module (e.g., 3-generation mobile communication module, 3.5-generation mobile communication module, 4-generation mobile communication module or the like), the controller 170 may further include a Communication Processor (CP). In addition, the controller 170 may further include an Image Signal Processor (ISP) when the electronic device 100 has a camera. The aforementioned processors may be integrated into one package in which two or more independent cores (e.g., quad-core) are implemented by a single integrated circuit. For example, the AP 172 may be integrated into one multi-core processor. The aforementioned processors (e.g., AP and ISP) may be a System on Chip (SoC). Further, the aforementioned processors (e.g., AP and ISP) may be packaged as a multi-layer.

In another example, the electronic device 100 may further include components which have not been mentioned above, such as a speaker, a microphone, an ear jack, a camera, an acceleration sensor, a proximity sensor, an illumination sensor, a Global Positioning System (GPS) reception module and the like.

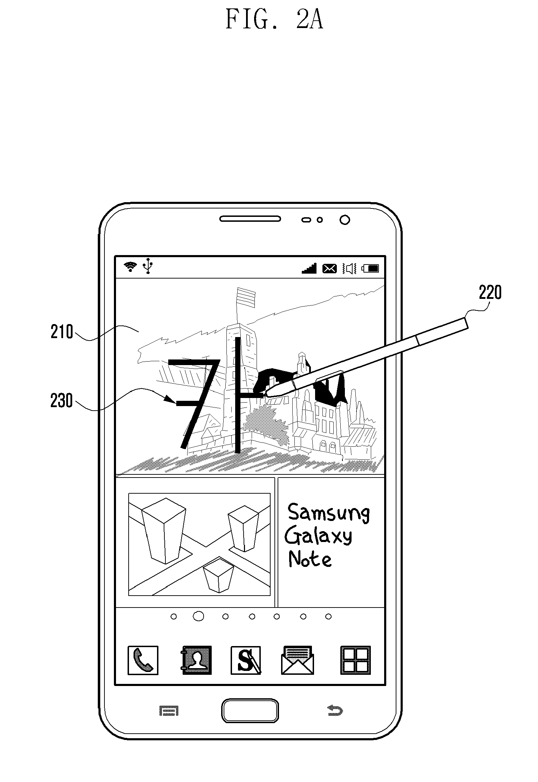

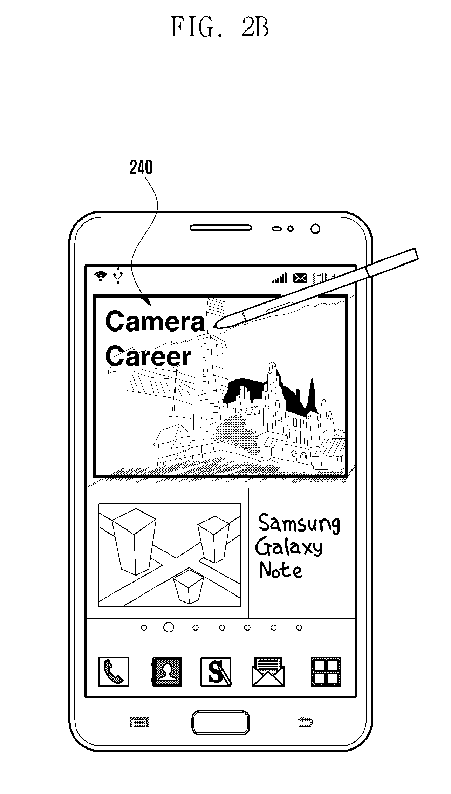

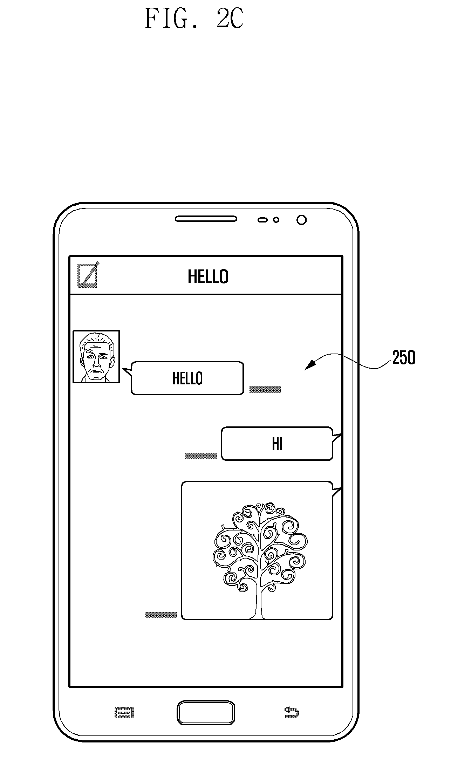

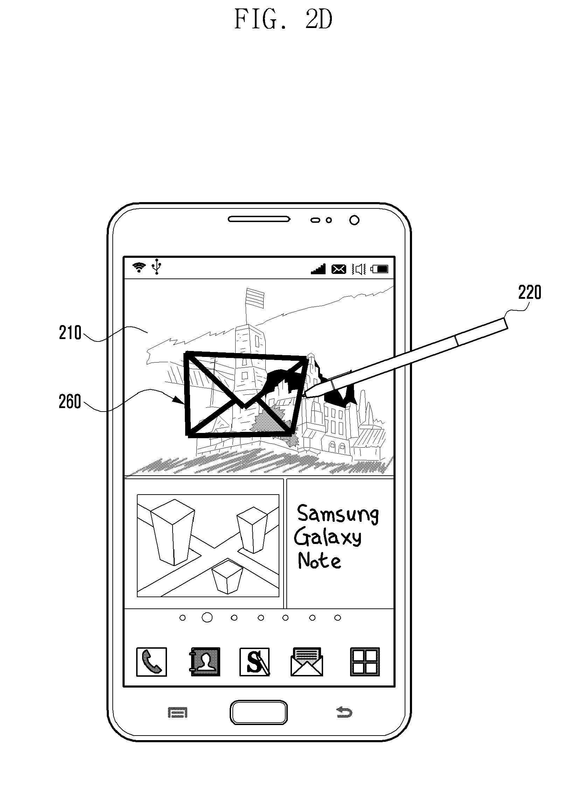

Referring now to FIG. 2A, a working example is disclosed. In FIG. 2A, a predetermined image 210 may be displayed on the touch screen. The image 210 may be a lock image, a home image, or an application execution image. Here, the lock image, the home image and the application execution image may be referred to as a lock screen, a home screen and an application execution screen, respectively. In this example, the electronic device may detect a movement of a pen 220 while displaying the image 210. When the movement of the pen 220 is detected, the electronic device may display a trace 230 corresponding to the movement on the image 210. Referring to FIGS. 2B and 2C, the electronic device may search for an application corresponding to the trace 230 in an application list and display information 240 associated with each of the applications that were found. When the displayed information 240 is selected, the electronic device may execute the corresponding application and display an execution image 250 of the application. Referring to FIG. 2D, the user may draw a trace 260, such as a 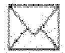 , by using the pen 220. The electronic device may detect the trace 260 and search for an application corresponding to the trace 260 in the application list.

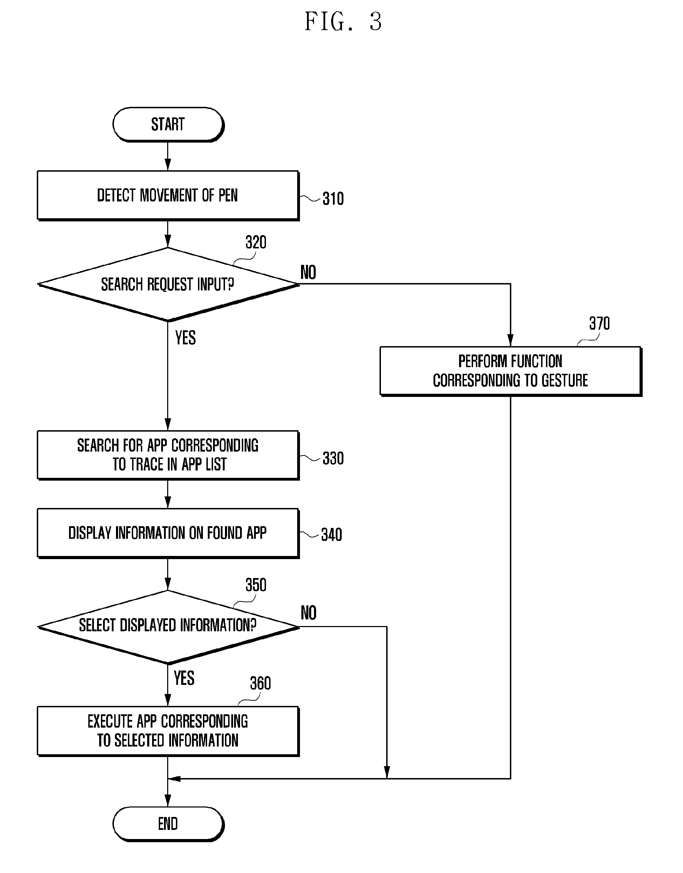

FIG. 3 is a flowchart describing an example execution method in accordance with aspects of the present disclosure. Referring to FIG. 3, in block 310, the controller 170 may detect a movement of the pen 150 through the touch panel 111. In block 320, the controller 170 may determine whether the detected movement is a search request input (e.g., a request to search and execute an application). In one example, when the movement is detected while the button 151 is pressed, the detected movement may be determined as the search request input. In another example, when movement is detected while the button 151 of the pen 150 is not pressed, the detected movement may be determined as another type of input.

In yet another example, when the button 151 is pressed and then movement of the pen 150 is detected regardless of whether the pressing of the button 151 is ceased, the detected movement may be determined as the search request input. When the movement is detected without the button 151 being pressed, the detected movement may be determined as another request input.

In yet another example, when the detected movement is a hovering movement, the detected movement may be determined as the search request input. When the detected movement is a touch movement, the detected movement may be determined as another request input. Alternatively, when the detected movement is the hovering movement, the detected movement may be determined as the search request input. When the detected movement is the touch movement, the detected movement may be determined as another request input.

In yet a further example, a pen input mode may be preset as one of a drawing mode and a gesture mode. For example, when a predetermined key (e.g., key formed on a side surface of the electronic device) of the key input unit 120 is pressed or a predetermined soft key displayed on the screen is pressed, the pen input mode may be changed to the gesture mode from the drawing mode. Conversely, the pen input mode may be changed to the drawing mode from the gesture mode. When the movement of the pen 150 is detected in the drawing mode, the detected movement may be determined as the search request input. When the movement of the pen 150 is detected in the gesture mode, the detected movement may be determined as another request input.

When the detected movement is determined as the search request input in block 320, the controller 170 may search for an application corresponding to the movement trace in application list 161, as shown in block 330. In one example, controller 170 may analyze the movement of the pen 150. The analysis may include detecting the trace corresponding to the movement and converting the detected trace to text. The controller 170 may store the results of the analysis in memory 160. Such analysis may include information associated with the recognized trace and the corresponding text. The controller 170 may search for an application corresponding to the analysis result in the application list 161.

In a further example, controller 170 may convert the detected trace to text adaptable for searching the application. That is, the text may be used to search for an application whose name at least partially contains the converted text. For example, when the text acquired through the analysis is "ca", "camera", "career", or "car" an application whose name contains this text may be found in the application list 161.

In a further example, controller 170 may search for an application which can execute a function corresponding to the converted text. For example, when the text acquired is a region name, such as "Seoul", a map related application may be found.

In a further example, controller 170 may search for an application which can execute a function corresponding to the identified trace. For example, when the recognized trace has a shape of 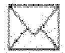 , applications related to sending or receiving a message may be found.

In block 340, controller 170 may control the display unit 110 to display information associated with an application that was found. The displayed information may be information through which a user can visually recognize the application's function or purpose. Such information may comprise a name, an icon, or a thumbnail associated with the application.

In block 350, controller 170 may determine whether to select the displayed information. When selection of the displayed information is detected, the controller 170 may execute the application associated with the selected information in block 360. As a result of the execution, an image of the corresponding application may be displayed on the screen.

In a further example, when the detected movement is a gesture in block 320, the controller 170 may perform a function corresponding to the detected gesture in block 370. For example, when the gesture is a "flick (↑) from bottom to top", the controller 170 may control the display unit 110 to display a menu corresponding to the currently displayed image such that the menu overlaps the image. When the gesture is a "flick (←) from right to left", the controller 170 may control the display unit 110 to display a previous image.

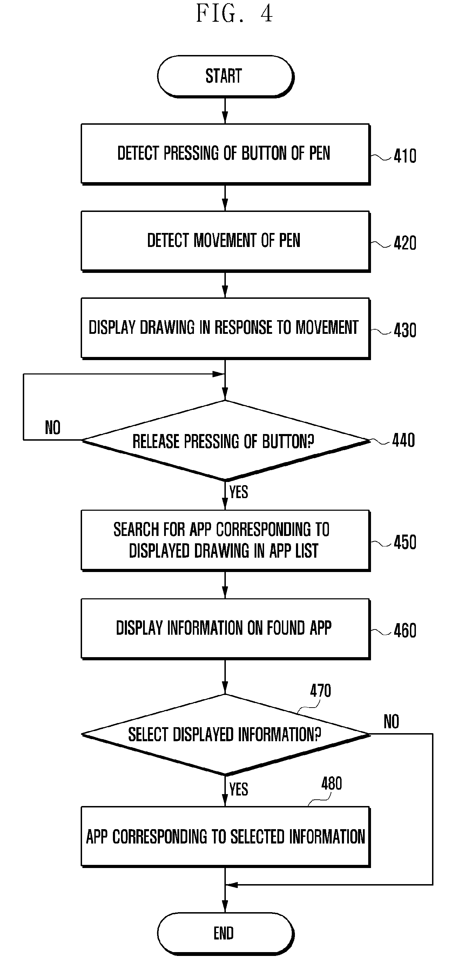

Referring now to FIG. 4, a flowchart describing an example application execution method in accordance with aspects of the present disclosure is shown. In block 410, controller 170 may detect, via touch panel 111, that button 151 of pen 150 is being pressed. In block 420, controller 170 may detect a movement of the pen 150 via touch panel 111 such that the button press and the movement are simultaneously detected.

In block 430, controller 170 may control the display unit 110 to display a trace of the movement of pen 150. That is, the controller 170 may analyze the movement of the pen 150 to identify the trace and control the display unit 110 to display the identified trace on the screen.

Controller 170 may detect a release of button 151 in block 440, and search application list 161 for an application corresponding to the displayed trace while button 151 is released, in block 450. In block 460, the controller 170 may control the display unit 110 to display information associated with the application that was found. In block 470, the controller 170 may determine whether to select the displayed information. When a user input for selecting the displayed information is detected, the controller 170 may execute an application corresponding to the selected information in block 480.

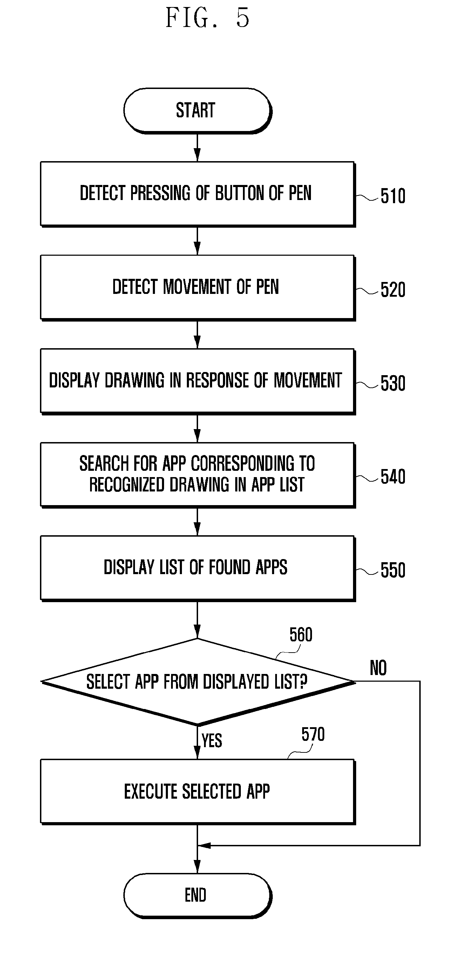

Referring to FIG. 5, a flowchart of a further example execution method is shown. At block 510, the controller 170 may detect, via touch panel 111, button 151 of pen 150 being pressed. In block 520, controller 170 may detect, via touch panel 111, a movement of pen 150 such that the movement and the button press are simultaneously detected.

In block 530, controller 170 may identify a trace of the movement of pen 150. In block 540, the controller 170 may search application list 161 for an application corresponding to trace. In block 550, controller 170 may control the display unit 110 to display information associated with the application that was found. In block 560, controller 170 may execute an application corresponding to the selected information, in block 570, when selection of the displayed information is detected.

Advantageously, the above described method and device may allow a user to quickly launch an application stored in an electronic device. In this regard, the application may be launched based on movement traces generated by a user with an object that includes, but is not limited to, a finger, a stylus, a pen, etc. In turn, users may have a better user experience while navigating the applications in their device.

In a further example, the controller 170 may detect, via another element(e.g., the key input unit 120), a change of input mode(e.g., a change from the gesture mode to the drawing mode). When a movement of an object (e.g., a finger, pen, stylus etc.) is detected in the drawing mode, the controller 170 may identify a trace of the movement of the object. The controller 170 may search the application list 161 for an application corresponding to the trace. The controller 170 may control the display unit 110 to display information associated with the application that was found. When selection of the displayed information is detected, the controller 170 may execute an application corresponding to the selected information.

In a further example, when a movement of an object (e.g., a finger, pen, stylus etc.) is detected in a state that a searching function is being activated, the controller 170 may identify a trace of the movement of the object. The controller 170 may search the application list 161 for an application corresponding to the trace. The controller 170 may control the display unit 110 to display information associated with the application that was found. When selection of the displayed information is detected, the controller 170 may execute an application corresponding to the selected information.

The above-described examples of the present disclosure can be implemented in hardware, firmware or via the execution of software or computer code that can be stored in a non-transitory machine readable medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

In addition, an artisan understands and appreciates that a "processor" or "microprocessor" constitute hardware in the claimed invention. Under the broadest reasonable interpretation, the appended claims constitute statutory subject matter in compliance with 35 U.S.C. §101.

The functions and process steps herein may be performed automatically or wholly or partially in response to user command. An activity (including a step) performed automatically is performed in response to executable instruction or device operation without user direct initiation of the activity.

The terms "unit" or "module" referred to herein is to be understood as comprising hardware such as a processor or microprocessor configured for a certain desired functionality, or a non-transitory medium comprising machine executable code, in accordance with statutory subject matter under 35 U.S.C. §101 and does not constitute software per se.

The method and device disclosed herein are not limited to the above-described embodiments and it is understood that they may be modified and implemented without departing from the spirit and scope of the present disclosure.

## Claims

1. A method comprising:
detecting a movement of an object through a touch panel of an electronic device;
searching for an application corresponding to the movement of the object in response to the movement;
displaying information associated with the application, when the application corresponding to the movement is found; and
executing the application corresponding to the movement, when selection of the displayed information is detected.

2. The method of claim 1, wherein searching for the application comprises:
identifying a trace corresponding to the movement of the object; and
searching for the application corresponding to the trace.

3. The method of claim 2, wherein the object is a pen and the trace is identified while a button arranged in the pen is pressed.

4. The method of claim 2, wherein searching for the application comprises converting the trace to text that is adaptable for searching the application.

5. The method of claim 1, further comprising:
displaying a trace in response to the movement of the object, when the object is a pen such that pressing of a button arranged in the pen is detected;
detecting a release of the button through the touch panel; and
searching for the application corresponding to the displayed trace in response to release of the the button.

6. The method of claim 1, wherein the displaying of the information associated with the application comprises displaying at least one of a name, an icon, and a thumbnail of the application.

7. The method of claim 1, wherein the executing of the application associated with the displayed information comprises displaying an image corresponding to the application.

8. An electronic device comprising:
a display unit including a touch panel;
at least one processor to:
detect a movement of an object through the touch panel;
search for an application corresponding to the movement of the object in response to the movement;
display information associated with the application, when the application corresponding to the movement is found; and
execute the application corresponding to the movement, when selection of the displayed information is detected.

9. The electronic device of claim 8, wherein the at least one processor to further identify a trace corresponding to the movement of the object; and searching for the application corresponding to the trace.

10. The electronic device of claim 9, wherein the object is a pen and the trace is identified while a button arranged in the pen is pressed.

11. The electronic device of claim 9, wherein the at least one processor to further convert the trace to text that is adaptable for searching the application.

12. The electronic device of claim 8, wherein the at least one processor to further:
display a trace in response to the movement of the object, when the object is a pen such that pressing of a button arranged in the pen is detected;
detect a release of the button through the touch panel; and
search for the application corresponding to the displayed trace in response to release of the the button.

13. The electronic device of claim 8, wherein to display information associated with the application the at least one processor to further display at least one of a name, an icon, and a thumbnail associated with the application.

14. The electronic device of claim 8, wherein to execute the application the at least one processor to further display an image related to the application, when selection of the displayed information is detected.

15. The electronic device of claim 8, wherein the at least one processor includes an application processor.
